# EUROPEAN PATENT APPLICATION

(11) **EP 2 140 747 A2**
(43) Date of publication of application: **06.01.2010**
(21) Application number: 09164559.8
(22) Date of filing: 03.07.2009
(51) Int. Cl.: A01B 21/02, A01B 35/28, A01B 39/08

(54) **Device for working the ground**

(30) Priority: 03.07.2008 NL 1035653
(71) Applicant: AGRO-INVENT B.V., 8308 RT Nagele (NL)
(72) Inventor: Capelle, Adriaan Cornelis, 8308 RT Nagele (NL)
(74) Representative: Bartelds, Erik

(57) **Abstract**

The invention relates to a device for working the ground, comprising a frame (3) which is displaceable over the ground and which has at least a pair of crumbling tools (5) suspended therefrom, each of which consists of a body (8) which is rotatable round a lying axis and which is provided with a number of radially protruding, elongate crumbling members (9), wherein the rotation axes of the rotatable bodies enclose an angle and the crumbling members of the tools are intermeshing, and wherein at least some of the crumbling members comprise a substantially straight main segment (12) and a bent end segment (13), which end segment encloses an obtuse angle with the main segment.

## Description

The invention relates to a device for working the ground, comprising a frame which is displaceable over the ground and which has at least a pair of crumbling tools suspended therefrom, each of which consists of a body which is rotatable round a lying axis and which is provided with a number of radially protruding, elongate crumbling members, wherein the rotation axes of the rotatable bodies enclose an angle and the crumbling members of the tools are intermeshing. Such a ground-working device is known under the name of "star crumbler".

The known star crumbler is formed by a frame from which a number of vertically directed arms are suspended. Each arm bears two rotation shafts on which the "stars" are bearing-mounted. These shafts together enclose an acute angle, whereby the planes round which the stars rotate are mutually intersecting so that the points of the stars or "teeth" are intermeshing. The rotation shafts also enclose an acute angle with the horizontal, whereby the stars rotate in a plane inclining relative to the ground. Finally, the shafts enclose an acute angle with the direction of displacement of the frame over the ground so that the stars are driven rotatingly when the frame is moved over the ground and their teeth engage in the ground. Clods are here crumbled between the intermeshing teeth so that the structure of the ground is improved. In addition, the top layer of the ground is churned up, whereby it becomes better aerated and substances possibly applied to the ground, such as fertilizers, can be properly mixed into the top layer.

The invention has for its object to further improve a ground working device of the above described type. According to a first aspect of the invention, this is achieved in such a device in that at least some of the crumbling members comprise a substantially straight main segment and a bent end segment, which end segment encloses an obtuse angle with the main segment. A very intensive working of the ground is achieved due to the bent end segment.

According to a second aspect of the invention, a ground working device is provided wherein at least some of the crumbling members comprise a flattened end segment. This flattening also contributes toward an intensive working of the ground.

Each flattened end segment is preferably wider than the remaining part of the crumbling member. A large effective surface area of the crumbling member is thus obtained.

The above stated measures together ensure that the top layer of the ground is spread in a fan shape. In addition, possibly present weeds are efficiently destroyed by the described embodiment of the crumbling members.

A structurally simple and robust embodiment is obtained when the rotatable body comprises a disc on which the crumbling members are mounted with regular interspacing. The crumbling members can for instance be welded to the side of the disc directed toward the ground.

According to yet another aspect of the invention, a ground working device is provided wherein each pair of crumbling tools is suspended from the frame in resiliently movable manner. The tools can hereby yield to some extent when they strike against a particularly hard or tough part of the ground, thereby ensuring even running of the device over the ground and reducing the risk of damage.

Finally, the invention also relates to a crumbling tool and a crumbling member for applying in a ground working device as described above.

The invention is now elucidated on the basis of an example, wherein reference is made to the accompanying drawing, in which:

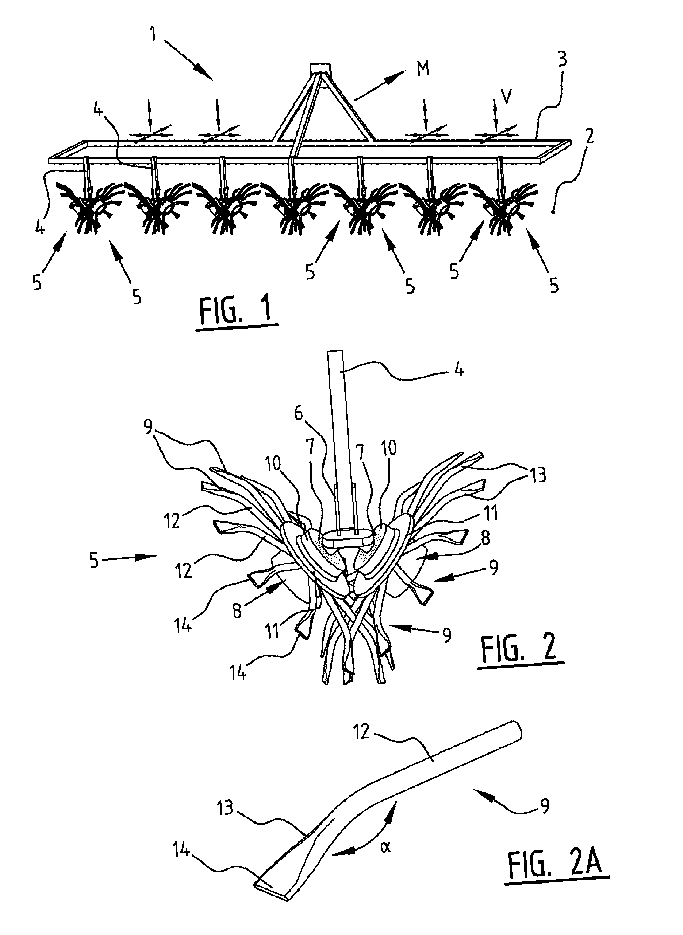

Fig. 1 is a perspective view of the ground working device according to the invention,
Fig. 2 is a front view of a crumbling tool as applied in the device of fig. 1,
Fig. 2A is a side view of a crumbling member as applied in the tool of fig. 2,

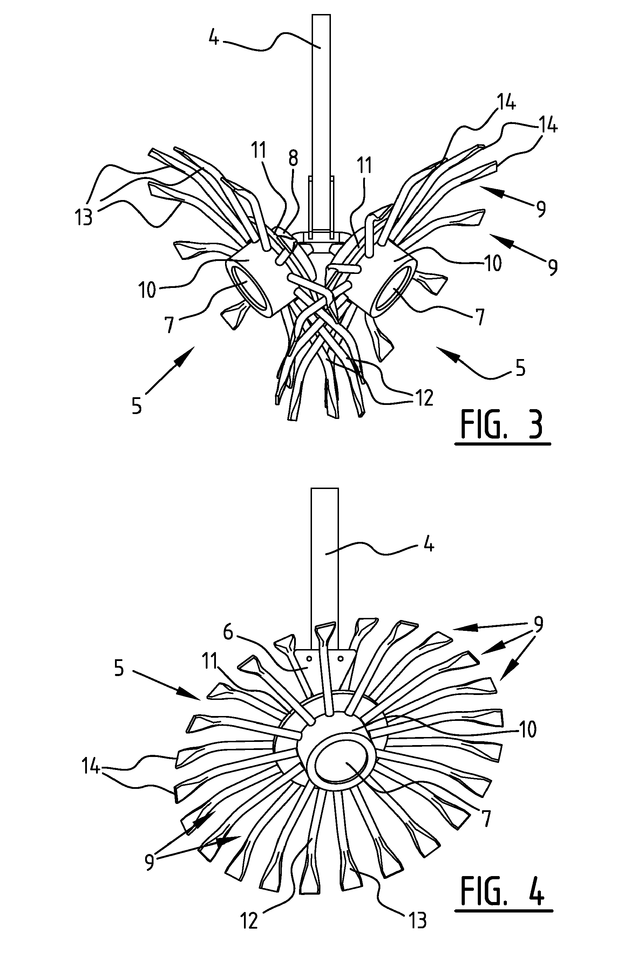

Fig. 3 is a rear view of the tool of fig. 2,
Fig. 4 is a side view of the tool, and

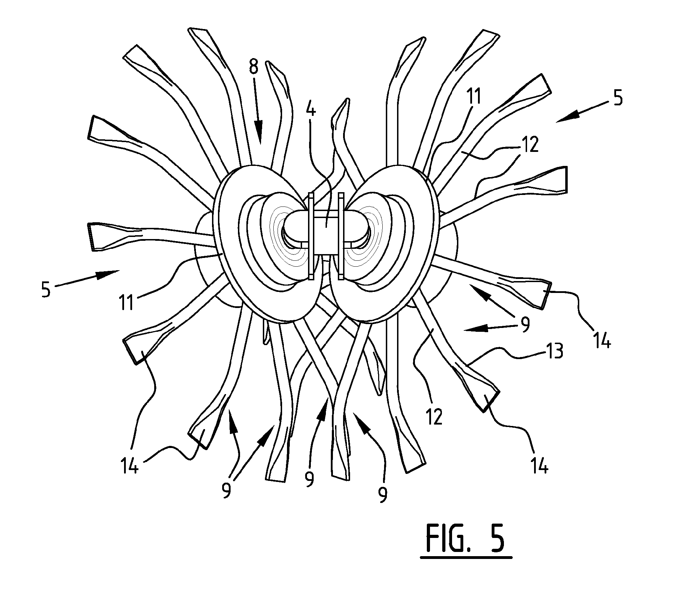

Fig. 5 shows a top view thereof.

A device 1 for working the ground 2 consists of a frame 3 which can be hitched behind an agricultural tractor or behind another ground working machine, for instance a fertilizing device. Fixed to frame 3 in the shown embodiment are a number of vertical arms 4, each carrying a pair of crumbling tools 5. Attached for this purpose to the bottom outer end of each vertical arm 4 is an adjustable sleeve 6, which in turn carries two rotation bearings 7. These bearings 7 enclose an acute angle with each other and with the horizontal. As shown schematically here, each vertical arm 4 is connected to frame 3 in resiliently movable manner. Instead of the shown movement option in three directions, it would otherwise also be possible here to opt for fewer movement possibilities, for instance only in vertical direction V or in direction of displacement M of device 1.

Mounted rotatably on each bearing 7 is a crumbling tool 5, consisting of a body 8 and a number of uniformly distributed, radial crumbling members 9. Rotatable body 8 comprises a cylindrical part 10 and a disc-shaped part 11 which is arranged therearound and to which crumbling members 9 are fixed. In the shown embodiment crumbling members 9, which take the form of elongate fingers, are welded to the side of disc 11 directed toward the ground 2.

Each crumbling member 9 here has a straight main segment 12 and a bent end segment 13 which encloses an obtuse angle with main segment 12. This angle can for instance amount to between 95 and 178 degrees, preferably to between 120 and 170 degrees and more preferably to between 140 and 160 degrees. End segment 13 is further flattened in the shown embodiment, and flattened part 14 of the end segment has a greater width than the rest of crumbling member 9, which can be manufactured from a bar profile.

The operation of device 1 is thus as follows. After frame 3 has been hitched to a tractor or other agricultural machine and has been brought to the correct height, the lowermost crumbling members 9 protrude into the ground. When frame 3 is now moved over the field, bodies 8 are then rotated by crumbling members 9 engaging in the ground. Crumbling members 9 of the two tools 5 which are mounted on a shared vertical arm 4 are here precisely intermeshing, whereby soil is taken up therebetween and thrown to the rear. Possible larger chunks and clods are herein crumbled, while weeds coming between crumbling members 9 are taken up and/or destroyed.

Although the invention is described above on the basis of an example, it will be apparent that it is not limited thereto and can be varied in many ways within the context and the scope of the appended claims.

## Claims

1. Device for working the ground, comprising a frame which is displaceable over the ground and which has at least a pair of crumbling tools suspended therefrom, each of which consists of a body which is rotatable round a lying axis and which is provided with a number of radially protruding, elongate crumbling members, wherein the rotation axes of the rotatable bodies enclose an angle and the crumbling members of the tools are intermeshing, **characterized in that** at least some of the crumbling members comprise a substantially straight main segment and a bent end segment, which end segment encloses an obtuse angle with the main segment.

2. Ground working device as claimed in claim 1 or the preamble thereof, **characterized in that** at least some of the crumbling members comprise a flattened end segment.

3. Ground working device as claimed in claim 2, **characterized in that** each flattened end segment is wider than the remaining part of the crumbling member.

4. Ground working device as claimed in any of the foregoing claims, **characterized in that** the rotatable body comprises a disc on which the crumbling members are mounted with regular interspacing.

5. Ground working device as claimed in any of the foregoing claims or according to the preamble of claim 1, **characterized in that** each pair of crumbling tools is suspended from the frame in resiliently movable manner.

6. Crumbling tool evidently intended for applying in a ground working device as claimed in any of the foregoing claims.

7. Crumbling member evidently intended for applying in a ground working device as claimed in any of the claims 1 to 5.
